# EUROPEAN PATENT SPECIFICATION

(11) **EP 4 367 487 B1**
(45) Date of publication and mention of the grant of the patent: **21.01.2026**
(21) Application number: 22733993.4
(22) Date of filing: 21.06.2022
(51) Int. Cl.: G01G 19/18, G01L 1/22

(54) **A LOAD CELL FOR DETECTING A FORCE, A SYSTEM FOR HANDLING A LOAD AND A METHOD FOR CALCULATING A SIZE OF A FORCE**
EINE MESSZELLE UM EINE KRAFT ZU DETEKTIEREN, EIN SYSTEM UM EINE LAST ZU HANDHABEN UND EIN VERFAHREN UM DIE GRÖSSE EINER KRAFT ZU BERECHNEN
UN CAPTEUR POUR DÉTECTER UNE FORCE, UN SYSTÈME POUR MANIER UNE CHARGE ET UN PROCÉDÉ POUR CALCULER LA GRANDEUR D'UNE FORCE

(30) Priority: 06.07.2021 SE 2150885
(43) Date of publication of application: 15.05.2024
(73) Proprietor: Intermercato AB, 272 93 Tommarp (SE)
(72) Inventor: HILDEBRAND, Olle, 272 93 Tommarp (SE); CARLANDER, Carl-Axel, 148 97 Sorunda (SE); ANDERSSON, Reinhold, 272 93 Tommarp (SE)
(74) Representative: AWA Sweden AB
(86) International application number: PCT/EP2022/066875
(87) International publication number: WO 2023/280564

(56) References cited:
- DE-A1- 102017 004 378

## Description

### Technical field

The invention relates to a load cell for detecting a force applied thereto by a first force applying element and a second force applying element. The invention also relates to a system for handling a load and a method for calculating a size of a force by means of a load cell.

### Background art

In many cases it is desirable to obtain knowledge of the weight of a load that is manipulated by lifting equipment such as a crane or similar, and in this way the weight of the total amount of goods manipulated. This type of information is important in order to make it possible to use the full loading capacity of a vehicle while at the same time avoiding overload. It is not possible to obtain the said information if the weight of the goods is not known in advance. The same problem applies with other forces applied to a work implement, such as forces in terms of compression, tension or torsion.

There are several different types of load cells for detecting and determining the size of a force applied to a work implement available on the market today. For example, different types of lifting equipment with integrated load cells that can give, in response to an applied load, a signal that corresponds to the force that the applied load exerts on the load cell is for example previously known.

DE 10 2017 004378 A1 discloses a flange-shaped torque sensor having low zero error at high rotational speeds. The sensor comprises two parallel, disc-shaped securing flanges, comprising securing boreholes which are provided in the edge region of said securing flanges, and a deforming element which extends between the securing flanges and on which strain gauges are arranged. The deforming element lies in the rotational axis of the double-flange torque sensor and, between the securing flanges, at least three rod-shaped spring elements extend which are secured to the outer edge region of the securing flanges or between the boreholes. No strain gauges or other sensors are provided on said spring elements.

EP 3 409 635 discloses a lifting system for handling a load, comprising a lifting arm extending at least partly between an operating device and a work implement, and a load cell for detecting a weight of the load. The load cell comprises a first portion connected to the lifting arm, a second portion connected to the work implement, and an intermediate portion connecting the first portion and the second portion. The intermediate portion comprises at least one strain gauge. The lifting system is characterised in that the first portion, the second portion and the intermediate portion are connected to each other in a radial direction.

A problem with the load cell disclosed above and other load cells according to known prior art is that they are load-carrying over the sensitive and weaker components thereof. This means that if the load cell breaks the entire system in which it is included potentially will break.

### Summary of the invention

It is an objective of the present invention to mitigate, alleviate or eliminate one or more of the above-identified deficiencies in the art and disadvantages singly or in any combination and solve at least the above-mentioned problems.

According to a first aspect of the invention, these and other objects, and/or advantages that will be apparent from the following description of embodiments, are achieved, in full or at least in part, by a load cell for detecting a force applied thereto by a first force applying element and a second force applying element. The load cell comprises an upper portion connectable to the first force applying element, a lower portion connectable the second force applying element, a first intermediate portion connecting the upper portion and the lower portion along an axial axis of the load cell, the first intermediate portion at least partly consisting of a measuring portion where at least one strain gauge is arranged, and a second intermediate portion connecting the upper portion and the lower portion, the second intermediate portion at least partly enclosing the first intermediate portion and being directly exposed to the force applied by the first and second force applying elements. The first intermediate portion is connected to the second intermediate portion only via the upper portion and the lower portion of the load cell.

This is advantageous in that the sensitive and force detecting components, i.e. the first intermediate portion comprising the measuring portion with at least one strain gauge on this case, will not be weigh-carrying. Should this portion break, any load carried by the load cell will be held in place by the robust second intermediate portion. The same applies when the force subjected onto the load cell is constituted by compression or torsion.

Another advantage is that the load cell will be able to detect very small and extremely large forces due to the unique configuration of the measuring portion.

According to another embodiment of the invention the load cell for detecting a force applied thereto is provided. The load cell comprises an upper portion, a lower portion, a first intermediate portion connecting the upper portion and the lower portion along an axial axis of the load cell, the first intermediate portion having a measuring portion where at least one strain gauge is arranged, and a second intermediate portion connecting the upper portion and the lower portion, the second intermediate portion at least partly enclosing the first intermediate portion and being directly exposed to the force, wherein the first intermediate portion is connected to the second intermediate portion only via the upper portion and the lower portion of the load cell.

The force may be constituted by a compression, tension or torsion.

The first intermediate portion may comprise an upper holding portion and a lower holding portion interconnected by means of the measuring portion, wherein the upper holding portion may be connected to the upper portion of the load cell and the lower holding portion being connected to the lower portion of the load cell.

The upper holding portion may be tapering from the upper portion of the load cell downwardly towards the measuring portion and the lower holding portion may be tapering from the lower portion of the load cell upwardly towards the measuring portion.

The upper holding portion and the lower holding portion may be pyramidically shaped.

The length of the measuring portion and the length of second intermediate portion are
established according to a predetermined ratio.

The predetermined length ratio may preferably be 1:10 or may more preferably be 1:7.

The second intermediate portion may comprise a plurality of separated leg portions arranged at a 90-degree angle.

The size of the leg portions may be large-scale in comparison to the size of the measuring portion.

The measuring portion may comprise four strain gauges.

According to a second aspect of the invention, these and other objects are achieved, in full or at least in part, by a system for handling a load. The system comprises a first force applying element, a second force applying element, and a load cell according to the features described above. The first force applying element is connected to the upper portion of the load cell and the second force applying element is connected to the lower portion of the load cell.

The system may further comprise a control unit connected to the load cell and adapted to calculate the size of the force based a signal from the at least one strain gauge.

According to a third aspect of the invention, these and other objects are achieved, in full or at least in part, by a method for calculating a size of a force by means of a load cell according to the features described above. The method comprises detecting a length or angle change of the measuring portion, as a result of the force applied onto the load cell, by means of the at least one strain gauge, and calculating the size of the force based on the length or angle change.

Effects and features of the second and third aspects of the present invention are largely analogous to those described above in connection with the first aspect of the inventive concept. Embodiments mentioned in relation to the first aspect of the present invention are largely compatible with the further aspects of the invention.

Other objectives, features and advantages of the present invention will appear from the following detailed disclosure, from the attached claims, as well as from the drawings. It is noted that the invention relates to all possible combinations of features.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

As used herein, the term "comprising" and variations of that term are not intended to exclude other additives, components, integers or steps.

### Brief description of the drawings

The above, as well as additional objects, features and advantages of the present invention, will be better understood through the following illustrative and non-limiting detailed description of embodiments of the present invention, with reference to the appended drawings, where the same reference numerals may be used for similar elements, and wherein:
Fig. 1A is a perspective view of an exemplary embodiment of a load cell according to a first aspect of the invention.
Fig. 1B is another perspective view of the load cell in Fig. 1A.
Fig. 1C is a perspective view of another exemplary embodiment of the load cell according to the first aspect of the invention
Fig. 2 is a perspective view of an exemplary embodiment of a system for handling a load according to a second aspect of the invention.

### Detailed description of preferred embodiments of the invention

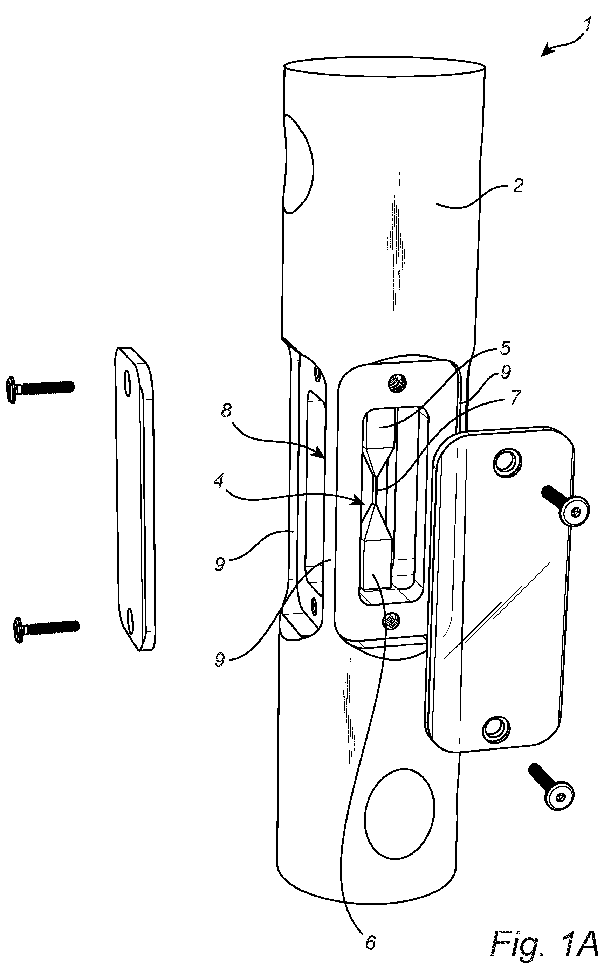

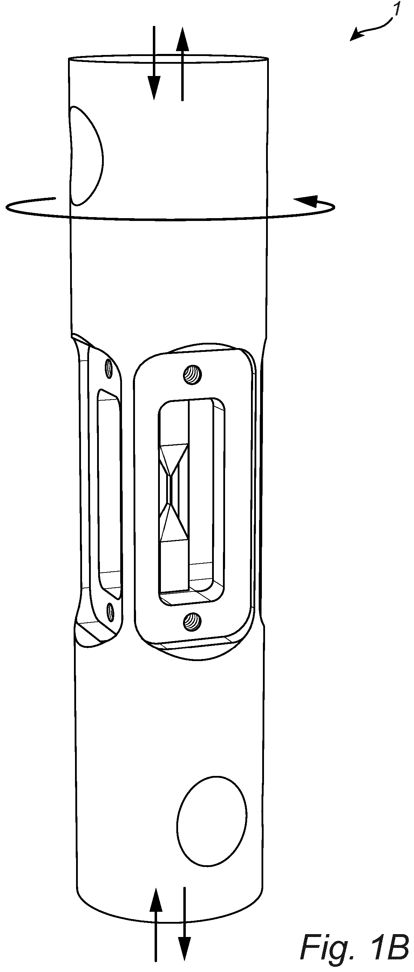

Fig. 1A and 1B illustrate an exemplary embodiment of a load cell 1 for detecting a force applied thereto by outer elements. The load cell 1 has an upper portion 2 which is connectable to a first outer force applying element and a lower portion 3 connectable the second outer force applying element.

A first intermediate portion 4 is arranged to connect the upper portion 2 with the lower portion 3 along an axial axis of the load cell 1. The intermediate portion 4 has an upper holding portion 5 and a lower holding portion 6 interconnected by means of a measuring portion 7 which is arranged therebetween. In the measuring portion 7, four strain gauges (not shown) are arranged.

The upper holding portion 5 is connected to the upper portion 2 of the load cell 1 and the lower holding portion 6 is connected to the lower portion 3 of the load cell 1. The upper holding portion 5 is tapering from the upper portion 2 of the load cell 1 downwardly towards the measuring portion 7 and the lower holding portion 6 is tapering from the lower portion 3 of the load cell 1 upwardly towards the measuring portion 7. In other words, the upper holding portion 5 and the lower holding portion 6 are pyramidically shaped. Naturally, other shapes and forms of the different portions of the first intermediate portion 4 are also possible.

A second intermediate portion 8 is arranged to connect the upper portion 2 and the lower portion 3 of the load cell 1. The second intermediate portion 8 is constituted by four separated leg portions 9 arranged at a 90-degree angle to party enclose the measuring portion 7. This way, the second intermediate portion 8 will be directly exposed to the force applied by the outer first and second force applying elements. Naturally, other shapes and forms of the different portions of the second intermediate portion 8 are also possible.

The first intermediate portion 4 is connected to the second intermediate portion 8 only via the upper portion 2 and the lower portion 3 of the load cell 1, i.e. there is no further radial connection between the first intermediate portion 4 and the second intermediate portion 8.

The length of measuring portion 7 and the length of second intermediate portion 8 are established according to a predetermined ratio, preferably 1:10.

The load cell 1 preferably comprises an inspection window such that the any components thereof can be inspected and/or access for service or replacement at any time.

The load cell 1 is able to detect forces in various directions (see Fig. 1B). It can, for example, detect a force constituted by compression, tension as well as torsion. The force applied to the load cell 1 in any of the directions previously indicated generates a movement in the second intermediate portion 8 and the first intermediate portion 4. The relative size of this movement determines size of the output signal created by the strain gauges applied to the measuring portion 7. As the measuring portion 7 is smaller than the second intermediate portion 8, its relative movement will be bigger. The bigger the relative movement is, the stronger the output signal from the strain gauges. The configuration of the load cell 1 makes it possible to combine a strong output signal with high mechanical strength. From the output signal of the strain gauges it is possible to calculate a weight in kilograms, a force in Newton or a torque in Newton-metre.

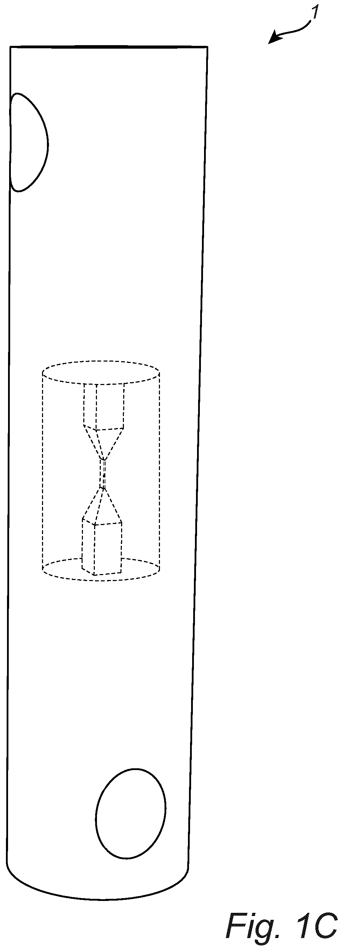

In Fig. 1C, another exemplary embodiment of a load cell 1 is illustrated. In this specific embodiment, the second intermediate portion 8 completely surrounds the first intermediate portion 4. The other features of the load cell 1 are the same as described above.

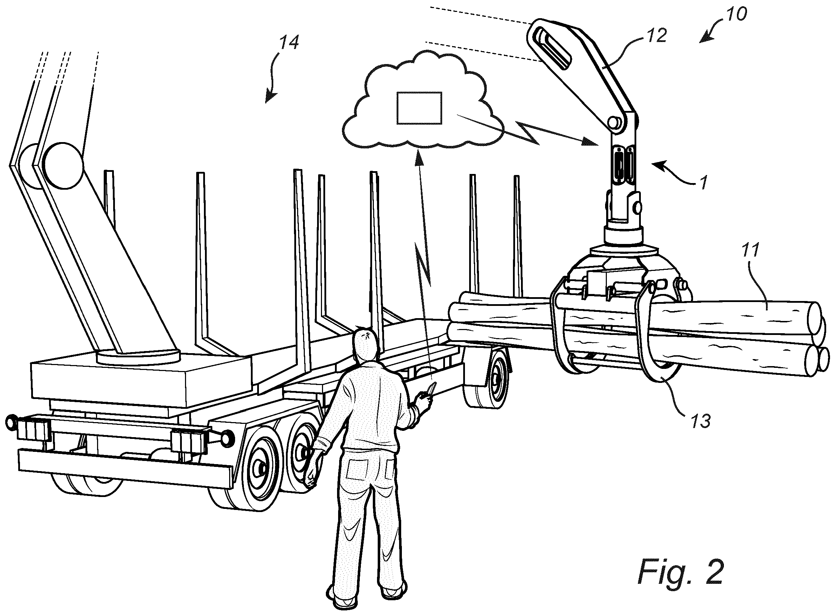

Fig. 2 illustrates an exemplary embodiment of a system 10 for handling a load 11. The system 10 comprises a first force applying element 12, a second force applying element 13, and a load cell 1. The first force applying element 12 is connected to the upper portion 2 of the load cell 1 and the second force applying element 13 is connected to the lower portion 3 of the load cell 1. The system has a control unit (not shown) connected to the load cell 1 and adapted to calculate the size of the force based a signal from the strain gauges arranged in the measuring portion 7.

In the specific example illustrated in Fig. 2, the system 10 is constituted by a lifting system. The lifting system comprises a lifting arm 12 (which is the first force applying element) extending between a working unit 14 and a gripping tool 13 (which is the second force applying element), and the load cell 1 arranged therebetween and used to detect a weight of the load 11.

The control unit is adapted to calculate the weight of the load 11 based on the signal from the strain gauges, and potentially display the results on some sort of display unit connected thereto. The control unit could potentially be located in a cab of the working unit 14 and the communication between the control unit and the display unit is preferably achieved by means of a cable or wireless connection.

Naturally, other systems are also possible. A container could be placed on top on one or several load cells 1 which then instead are used to detect compression of the measuring portion 7 by means of the stain gauges arranged therein to in turn calculate the pressure applied thereon.

The skilled person realizes that a number of modifications of the embodiments described herein are possible without departing from the scope of the invention, which is defined in the appended claims.

For instance, the size, number and shape of any components of the load cell 1 may be varied in any suitable manner.

## Claims

1. A load cell (1) for detecting a force applied thereto by a first force applying element (12) and a second force applying element (13), the force being constituted by compression or tension, wherein the loadcell comprises
an upper portion (2) connectable to the first force applying element (12),
a lower portion (3) connectable the second force applying element (13),
a first intermediate portion (4) connecting the upper portion (2) and the lower portion (3) along an axial axis of the load cell (1), the first intermediate portion (4) comprising a measuring portion (7) where at least one strain gauge is arranged, and
a second intermediate portion (8) connecting the upper portion (2) and the lower portion (3), the second intermediate portion (8) enclosing the first intermediate portion (4) and being directly exposed to the force applied by the first and second force applying elements (12, 13),
wherein the first intermediate portion (4) is connected to the second intermediate portion (8) only via the upper portion (2) and the lower portion (3) of the load cell (1), and
**characterised in that** the length of measuring portion (7) and the length of second intermediate portion (8) are established according to a predetermined ratio.

2. The load cell (1) according to claim 1, wherein the force is constituted by a compression or tension.

3. The load cell (1) according to claim 1 or 2, wherein the first intermediate portion (4) comprising an upper holding portion (5) and a lower holding portion (6) interconnected by means of the measuring portion (7), the upper holding portion (5) being connected to the upper portion (2) of the load cell (1) and the lower holding portion (6) being connected to the lower portion (3) of the load cell (1).

4. The load cell (1) according to claim 3, wherein the upper holding portion (5) is tapering from the upper portion (2) of the load cell (1) downwardly towards the measuring portion (7) and the lower holding portion (6) is tapering from the lower portion (3) of the load cell (1) upwardly towards the measuring portion (7).

5. The load cell (1) according to claim 4, wherein the upper holding portion (5) and the lower holding portion (6) are pyramidically shaped.

6. The load cell (1) according to claim 1, wherein the predetermined length ratio is preferably 1:10, or more preferably 1:7.

7. The load cell (1) according to any one of the preceding claims, wherein the second intermediate portion (8) comprises a plurality of separated leg portions (9) arranged at a 90-degree angle.

8. The load cell (1) according to claim 7, wherein the size of the leg portions (9) are large-scale in comparison to the size of the measuring portion (7).

9. The load cell (1) according to any one of the preceding claims, wherein measuring portion (7) comprises four strain gauges.

10. A system (10) for handling a load, comprising a first force applying element (12),
a second force applying element (13), and
a load cell (1) according to any one of the preceding claims,
wherein the first force applying element (12) is connected to the upper portion (2) of the load cell (1) and the second force applying element (13) is connected to the lower portion (3) of the load cell (1).

11. The system (10) according to claim 10, further comprising a control unit connected to the load cell (1) and adapted to calculate the size of the force based a signal from the at least one strain gauge.

12. A method for calculating a size of a force by means of a load cell (1) according to any one of the claims 1 to 9,
detecting a length or angle change of the measuring portion (7), as a result of the force applied onto the load cell (1), by means of the at least one strain gauge, and
calculating the size of the force based on the detected length or angle change.

## Patentansprüche

1. Wägezelle (1) zum Erfassen einer Kraft, die durch ein erstes kraftaufbringendes Element (12) und ein zweites kraftaufbringendes Element (13) auf sie aufgebracht wird, wobei die Kraft durch Druck oder Zug gebildet wird, wobei die Wägezelle Folgendes umfasst:
einen oberen Abschnitt (2), der mit dem ersten kraftaufbringenden Element (12) verbunden werden kann,
einen unteren Abschnitt (3), der mit dem zweiten kraftaufbringenden Element (13) verbunden werden kann,
einen ersten Zwischenabschnitt (4), der den oberen Abschnitt (2) und den unteren Abschnitt (3) entlang einer axialen Achse der Wägezelle (1) verbindet, wobei der erste Zwischenabschnitt (4) einen Messabschnitt (7) umfasst, in dem mindestens ein Dehnungsmessstreifen angeordnet ist, und
einen zweiten Zwischenabschnitt (8), der den oberen Abschnitt (2) und den unteren Abschnitt (3) verbindet,
wobei der zweite Zwischenabschnitt (8) den ersten Zwischenabschnitt (4) umschließt und direkt der Kraft ausgesetzt ist, die von dem ersten und zweiten kraftaufbringenden Element (12, 13) aufgebracht wird,
wobei der erste Zwischenabschnitt (4) nur über den oberen Abschnitt (2) und den unteren Abschnitt (3) der Wägezelle (1) mit dem zweiten Zwischenabschnitt (8) verbunden ist und
**dadurch gekennzeichnet, dass** die Länge des Messabschnitts (7) und die Länge des zweiten Zwischenabschnitts (8) nach einem vorgegebenen Verhältnis festgelegt sind.

2. Wägezelle (1) nach Anspruch 1, wobei die Kraft durch Druck oder Zug gebildet wird.

3. Wägezelle (1) nach Anspruch 1 oder 2, wobei der erste Zwischenabschnitt (4) einen oberen Halteabschnitt (5) und einen unteren Halteabschnitt (6) umfasst, die über den Messabschnitt (7) miteinander verbunden sind, wobei der obere Halteabschnitt (5) mit dem oberen Abschnitt (2) der Wägezelle (1) verbunden ist und der untere Halteabschnitt (6) mit dem unteren Abschnitt (3) der Wägezelle (1) verbunden ist.

4. Wägezelle (1) nach Anspruch 3, wobei sich der obere Halteabschnitt (5) vom oberen Abschnitt (2) der Wägezelle (1) nach unten zum Messabschnitt (7) verjüngt und sich der untere Halteabschnitt (6) vom unteren Abschnitt (3) der Wägezelle (1) nach oben zum Messabschnitt (7) verjüngt.

5. Wägezelle (1) nach Anspruch 4, wobei der obere Halteabschnitt (5) und der untere Halteabschnitt (6) pyramidenförmig sind.

6. Wägezelle (1) nach Anspruch 1, wobei das vorgegebene Längenverhältnis vorzugsweise 1:10, oder weiter bevorzugt 1:7, beträgt.

7. Wägezelle (1) nach einem der vorhergehenden Ansprüche, wobei der zweite Zwischenabschnitt (8) mehrere getrennte Schenkelabschnitte (9) umfasst, die in einem 90-Grad-Winkel angeordnet sind.

8. Wägezelle (1) nach Anspruch 7, wobei die Größe der Schenkelabschnitte (9) im Vergleich zur Größe des Messabschnitts (7) groß ist.

9. Wägezelle (1) nach einem der vorhergehenden Ansprüche, wobei der Messabschnitt (7) vier Dehnungsmessstreifen umfasst.

10. System (10) zur Handhabung einer Last, umfassend ein erstes kraftaufbringendes Element (12),
ein zweites kraftaufbringendes Element (13) und
eine Wägezelle (1) nach einem der vorhergehenden Ansprüche,
wobei das erste kraftaufbringende Element (12) mit dem oberen Abschnitt (2) der Wägezelle (1) verbunden ist und das zweite kraftaufbringende Element (13) mit dem unteren Abschnitt (3) der Wägezelle (1) verbunden ist.

11. System (10) nach Anspruch 10, das ferner eine mit der Wägezelle (1) verbundene Steuereinheit umfasst, die zur Berechnung der Größe der Kraft basierend auf dem Signal von dem mindestens einen Dehnungsmessstreifen eingerichtet ist.

12. Verfahren zur Berechnung der Größe einer Kraft mittels einer Wägezelle (1) nach einem der Ansprüche 1 bis 9,
Erfassen einer Längen- oder Winkeländerung des Messabschnitts (7) infolge der auf die Wägezelle (1) aufgebrachten Kraft mittels mindestens eines Dehnungsmessstreifens und
Berechnen der Größe der Kraft basierend auf der erfassten Längen- oder Winkeländerung.

## Revendications

1. Capteur (1) pour détecter une force appliquée à celui-ci par un premier élément d'application de force (12) et un second élément d'application de force (13), la force étant constituée par une compression ou une tension, ledit capteur comprenant
une partie supérieure (2) pouvant être reliée au premier élément d'application de force (12),
une partie inférieure (3) pouvant être reliée au second élément d'application de force (13),
une première partie intermédiaire (4) reliant la partie supérieure (2) et la partie inférieure (3) le long d'un axe axial du capteur (1), la première partie intermédiaire (4) comprenant une partie de mesure (7) dans laquelle au moins une jauge de contrainte est disposée, et
une seconde partie intermédiaire (8) reliant la partie supérieure (2) et la partie inférieure (3), la seconde partie intermédiaire (8) entourant la première partie intermédiaire (4) et étant directement exposée à la force appliquée par les premier et second éléments d'application de force (12, 13),
la première partie intermédiaire (4) étant reliée à la seconde partie intermédiaire (8) uniquement par l'intermédiaire de la partie supérieure (2) et de la partie inférieure (3) du capteur (1), et
**caractérisé en ce que** la longueur de la partie de mesure (7) et la longueur de la seconde partie intermédiaire (8) sont déterminées selon un rapport prédéfini.

2. Capteur (1) selon la revendication 1, la force étant constituée par une compression ou une tension.

3. Capteur (1) selon la revendication 1 ou 2, la première partie intermédiaire (4) comprenant une partie de maintien supérieure (5) et une partie de maintien inférieure (6) reliées entre elles au moyen de la partie de mesure (7), la partie de maintien supérieure (5) étant reliée à la partie supérieure (2) du capteur (1) et la partie de maintien inférieure (6) étant reliée à la partie inférieure (3) du capteur (1).

4. Capteur (1) selon la revendication 3, la partie de maintien supérieure (5) étant effilée à partir de la partie supérieure (2) du capteur (1) vers le bas en direction de la partie de mesure (7) et la partie de maintien inférieure (6) étant effilée à partir de la partie inférieure (3) du capteur (1) vers le haut en direction de la partie de mesure (7).

5. Capteur (1) selon la revendication 4, la partie de maintien supérieure (5) et la partie de maintien inférieure (6) étant de forme pyramidale.

6. Capteur (1) selon la revendication 1, le rapport de longueur prédéfini étant de préférence de 1:10, ou de préférence encore de 1:7.

7. Capteur (1) selon l'une quelconque des revendications précédentes, la seconde partie intermédiaire (8) comprenant une pluralité de parties de jambe (9) séparées disposées à un angle de 90 degrés.

8. Capteur (1) selon la revendication 7, la dimension des parties de jambe (9) étant grande par rapport à la dimension de la partie de mesure (7).

9. Capteur (1) selon l'une quelconque des revendications précédentes, la partie de mesure (7) comprenant quatre jauges de contrainte.

10. Système (10) pour manier une charge, comprenant un premier élément d'application de force (12),
un second élément d'application de force (13), et
un capteur (1) selon l'une quelconque des revendications précédentes.
le premier élément d'application de force (12) étant relié à la partie supérieure (2) du capteur (1) et le second élément d'application de force (13) étant relié à la partie inférieure (3) du capteur (1).

11. Système (10) selon la revendication 10, comprenant en outre une unité de commande reliée au capteur (1) et conçue pour calculer la grandeur de la force sur la base d'un signal provenant de l'au moins une jauge de contrainte.

12. Procédé pour calculer une grandeur d'une force au moyen d'un capteur (1) selon l'une quelconque des revendications 1 à 9, comprenant les étapes consistant à détecter un changement de longueur ou d'angle de la partie de mesure (7), sous l'effet de la force appliquée sur le capteur (1), au moyen de l'au moins une jauge de contrainte, et
calculer la grandeur de la force en fonction du changement de longueur ou d'angle détecté.
